# FASCICULE DE BREVET EUROPEEN

(11) **EP 2 992 266 B1**
(45) Date de publication et mention de la délivrance du brevet: **02.06.2021**
(21) Numéro de dépôt: 14726701.7
(22) Date de dépôt: 25.04.2014
(51) Int. Cl.: F17C 5/02, F17C 9/00, F17C 9/02, F17C 13/02

(54) **PROCÉDÉ ET DISPOSITIF DE RAVITAILLEMENT EN LIQUIDE CRYOGÉNIQUE, NOTAMMENT EN GAZ NATUREL LIQUÉFIÉ**
VERFAHREN UND VORRICHTUNG ZUM AUFFÜLLEN EINER KRYOGENEN FLÜSSIGKEIT, INSBESONDERE VON FLÜSSIGERDGAS
METHOD AND DEVICE FOR REPLENSHING A SUPPLY OF CRYOGENIC LIQUID, NOTABLY OF LIQUEFIED NATURAL GAS

(30) Priorité: 30.04.2013 FR 1353952
(43) Date de publication de la demande: 09.03.2016
(73) Titulaire: Cryostar SAS, 68220 Hesingue (FR)
(72) Inventeur: FAUVEL, Philippe, F-12700 Capdenac Gare (FR); HEISCH, Philippe, F-90000 Belfort (FR)
(74) Mandataire: Meilinger, Claudia Sabine
(86) Numéro de dépôt international: PCT/FR2014/051010
(87) Numéro de publication internationale: WO 2014/177796

(56) Documents cités:
- WO-A1-2011/152965
- GB-A- 2 333 149
- US-A- 5 771 946

## Description

La présente invention concerne un procédé de ravitaillement en liquide cryogénique, notamment en gaz naturel liquéfié, ainsi qu'un dispositif pour la mise en œuvre d'un tel procédé.

Certains véhicules, le plus souvent des camions mais aussi par exemple des navires, utilisent du gaz naturel liquéfié comme carburant. Il convient de prévoir pour ces véhicules des stations de ravitaillement pour pouvoir "faire le plein" comme on le fait classiquement avec un véhicule fonctionnant à l'essence ou au gazole.

Cependant, pour remplir un réservoir avec du gaz naturel liquéfié (ou GNL), plusieurs contraintes existent, contraintes que l'on ne rencontre pas dans les stations-essence. Il est prévu sur (tous) les véhicules au GNL d'avoir un réservoir sous pression. Le remplissage ne peut donc pas se faire à pression ambiante. En outre, le GNL n'est pas à température ambiante et doit être distribué à basse température.

Il est fait référence au préambule du document WO-2011/152965 pour la présentation de l'art antérieur concernant le ravitaillement en GNL de véhicules (§[0003] à §[0007]).

Ce document WO-2011/152965 est considéré ici comme le document de l'art antérieur le plus proche de la présente invention. Il présente un procédé et un appareil de distribution de GNL permettant à partir d'un réservoir de stockage de fournir du gaz à des conditions de température et de pression spécifiées. Le procédé décrit prévoit des étapes de pressurisation d'une enceinte (appelée cuve de conditionnement dans ce document) de GNL à une première pression, puis d'acheminement du GNL à une seconde pression supérieure à la première pression vers un condenseur qui est dans une relation de transmission de chaleur avec l'enceinte, et enfin d'extraction du GNL du condenseur.

Le procédé et le dispositif décrits dans ce document permettent de fournir de façon satisfaisante du GNL à une pression et une température prédéterminées.

Le problème à l'origine de la présente invention provient du fait que tous les véhicules ne requièrent pas une même pression et une même température de ravitaillement en GNL. Avec un dispositif décrit dans le document WO-2011/152965 il est possible de faire varier la pression (et la température) de ravitaillement mais pour passer d'une pression (et sa température associée) à une autre, le temps nécessaire peut être relativement long, de l'ordre d'une heure ou plus. De ce fait, il faut prévoir par exemple de ravitailler un jour des véhicules avec une pression de ravitaillement et à une pression autre le lendemain

Le document GB 2 333 149 divulgue également un dispositif et un procédé de fourniture de gaz cryogénique.

Il apparaît bien entendu à l'homme du métier que de telles conditions de ravitaillement manquent de souplesse car un véhicule doit pouvoir être ravitaillé rapidement et de préférence on souhaite ravitailler les véhicules dans leur ordre d'arrivée à la station de ravitaillement.

La présente invention a alors pour but de fournir un procédé (et au moins un dispositif correspondant) permettant de délivrer du GNL, ou plus généralement du liquide cryogénique, à des conditions de température et de pression données et de changer rapidement ces conditions de manière à pouvoir ravitailler un véhicule nécessitant de faire le plein à une seconde pression suite à un ravitaillement d'un véhicule nécessitant un remplissage de son réservoir à une autre pression sans avoir à attendre longtemps.

De préférence, le procédé selon la présente invention sera économique sur le plan énergétique.

À cet effet, la présente invention propose un procédé de ravitaillement en liquide cryogénique à partir d'un réservoir de stockage comportant les étapes suivantes :
- pressuriser une enceinte en l'alimentant avec du gaz cryogénique à une première pression, ladite enceinte étant traversée par une ligne de circulation de fluide cryogénique dite ligne froide en provenance du réservoir de stockage, alimentée en gaz sous pression et présentant une évacuation de liquide condensé,
- pomper du liquide cryogénique dans la ligne froide à une seconde pression, et
- fourniture de liquide cryogénique en aval de la ligne froide,
- l'alimentation en gaz cryogénique de l'enceinte étant obtenue au moins partiellement en pompant du liquide cryogénique dans le réservoir de stockage et en le vaporisant dans un evaporateur ,des moyens de régulation (22) étant adaptés pour maintenir la première pression dans l'enceinte.
caractérisé en ce qu'il comporte une étape de régulation de pression après vaporisation du liquide cryogénique et avant son introduction dans l'enceinte.

Alors que dans les dispositifs connus de l'art antérieur le gaz cryogénique utilisé pour alimenter l'enceinte et la mettre sous pression provenait de la partie du réservoir de stockage contenant du fluide à l'état gazeux (partie supérieure du réservoir), il est proposé ici de prélever dans le réservoir de stockage du liquide cryogénique, de le faire passer à l'état gazeux et d'utiliser le gaz cryogénique ainsi obtenu pour pressuriser l'enceinte. Il est ainsi possible de décorréler entièrement la pression à l'intérieur du réservoir de stockage de la température à laquelle le fluide cryogénique est délivré en sortie de dispositif de ravitaillement. La pressurisation de l'enceinte est par exemple réalisée à l'aide d'une pompe et d'un évaporateur, ces éléments pouvant être disposés en série entre le réservoir de stockage et l'enceinte.

Lors de la mise en œuvre d'un procédé selon la présente invention, le liquide cryogénique à pression souhaitée et à température souhaitée est délivré à la sortie de la ligne froide traversant l'enceinte. La présente invention permet d'avoir des pressions plus élevées dans l'enceinte que dans les procédés de l'art antérieur. De ce fait, une plus grande plage de pressions peut être utilisée et la plage des températures de délivrance de liquide cryogénique est elle aussi plus grande.

Pour réaliser le contrôle de la température de sortie du liquide cryogénique, le procédé de ravitaillement selon l'invention comporte avantageusement une étape de régulation de pression après vaporisation du liquide cryogénique et avant son introduction dans l'enceinte.

Pour qu'une seule pompe suffise pour la mise en œuvre du procédé, on prévoit avantageusement que du liquide cryogénique est pompé hors du réservoir de stockage, et que le liquide pompé est utilisé, d'une part, pour l'alimentation de la ligne froide et, d'autre part, pour être vaporisé avant d'être conduit vers l'enceinte.

Pour pressuriser l'enceinte, il est avantageusement prévu qu'en outre du liquide cryogénique condensé au sein de l'enceinte soit revaporisé avant d'être réintroduit dans ladite enceinte. Il y a alors deux sources d'alimentation en gaz cryogénique pour l'enceinte pressurisée et cela permet de limiter le prélèvement de liquide cryogénique pour la pressurisation. Le liquide cryogénique condensé au sein de l'enceinte peut être par exemple revaporisé au sein d'une boucle comportant un évaporateur avant d'être réintroduit dans ladite enceinte.

La présente invention est particulièrement bien adaptée dans le cas où le liquide cryogénique est du gaz naturel liquéfié et où le gaz cryogénique est du gaz naturel à l'état gazeux. Toutefois, d'autres liquides cryogéniques (azote, air, argon, hydrogène, etc.) sont tout à fait compatibles avec la présente invention.

La présente invention concerne également un dispositif de ravitaillement en liquide cryogénique comportant un réservoir de stockage, une enceinte pressurisée traversée par une première ligne dite ligne froide avec une entrée alimentée par une pompe en liquide cryogénique en provenance du réservoir de stockage et une sortie de liquide cryogénique vers un réservoir à remplir, ladite enceinte étant en outre alimentée par des moyens d'alimentation en gaz cryogénique sous pression pour la pressurisation de l'enceinte et présentant une évacuation de liquide condensé, les moyens d'alimentation de l'enceinte avec du gaz cryogénique sous pression comportent une pompe d'alimentation en liquide cryogénique en provenance du réservoir de stockage ainsi que des moyens de vaporisation; caractérisé en ce que le dispositif comporte en outre des moyens de régulation de pression entre les moyens de vaporisation et l'enceinte.

Dans un tel dispositif de ravitaillement, une pompe et un évaporateur peuvent être par exemple disposés en série entre le réservoir de stockage et l'enceinte afin de pressuriser cette dernière.

Afin de pouvoir économiser du fluide cryogénique, le dispositif comporte avantageusement une boucle avec un échangeur thermique, ladite boucle comportant une ligne d'alimentation de l'échangeur thermique à partir de l'enceinte pressurisée permettant de prélever, de préférence par gravité, du gaz cryogénique condensé sous forme liquide au sein de l'enceinte pressurisée et une ligne de retour reliant la sortie de l'échangeur thermique à l'enceinte pressurisée permettant de réintroduire du gaz cryogénique dans la ligne chaude vers l'enceinte pressurisée. La boucle ainsi créée permet un "recyclage" du gaz cryogénique condensé sous forme liquide dans l'enceinte pressurisée et permet ainsi d'économiser du liquide cryogénique en provenance du réservoir. Il est également possible de réaliser une régulation en pression au niveau de l'enceinte pressurisée en reliant la boucle avec le réservoir de stockage par une ligne comportant une vanne. Cette ligne peut être reliée à la boucle en amont ou en aval de l'échangeur thermique.

Une forme de réalisation préférée du dispositif de ravitaillement selon l'invention prévoit que ce dispositif comporte une pompe destinée à prélever du liquide cryogénique dans le réservoir de stockage et à amener le liquide cryogénique prélevé à une pression supérieure à la pression du liquide dans le réservoir de stockage. Pour n'avoir qu'une seule pompe, en aval de la pompe une troisième ligne alimente la ligne froide et une quatrième ligne dérivée de la troisième alimente les moyens de vaporisation disposés en amont de l'enceinte.

Avantageusement, le dispositif de ravitaillement selon l'invention comporte en outre une ligne de livraison de liquide cryogénique permettant la délivrance de liquide cryogénique directement du réservoir de stockage.

Des détails et avantages de la présente invention apparaitront mieux de la description qui suit, faite en référence au dessin schématique annexé sur lequel :
La figure unique est une vue schématique illustrant une forme de réalisation préférée d'un dispositif de ravitaillement selon la présente invention.

Cette figure illustre une station de ravitaillement en gaz naturel liquéfié, ou GNL. Bien entendu, la même station, ou légèrement adaptée, pourrait aussi être utilisée pour la distribution d'autres fluides cryogéniques, comme par exemple de l'azote, de l'oxygène, de l'air, de l'argon, de l'éthylène, de l'hydrogène ou bien un mélange de certains de ces fluides.

La station de ravitaillement représentée est plus particulièrement destinée à remplir des réservoirs de véhicules de tous types, aussi bien des véhicules terrestres (camions notamment) mais aussi des navires et éventuellement des aéronefs. Le but d'une telle station de ravitaillement est de fournir du gaz naturel liquéfié à des véhicules dans des conditions de pression et de température spécifiques à chaque véhicule à partir d'un réservoir de stockage 2.

Le réservoir de stockage 2 contient du gaz naturel liquéfié ainsi que du gaz naturel à l'état gazeux au-dessus du gaz naturel à l'état liquide. La pression qui règne dans le réservoir de stockage 2 est appelée par la suite P1. Les moyens pour contrôler et maintenir la pression dans le réservoir de stockage 2 sont connus de l'homme du métier et ne sont pas décrits ici. Des variations de pression dans le réservoir de stockage 2 sont admises dans des limites gérées par les moyens de contrôle et de maintien évoqués. Typiquement, la pression P1 est comprise entre 2 et 10 bars (soit entre 2.10⁵ Pa et 10⁶ Pa), par exemple environ 6 bars (6.10⁵ Pa).

Une pompe 4 cryogénique est prévue pour prélever du GNL hors du réservoir de stockage par une conduite 6. La pompe 4 permet d'amener le liquide du réservoir à une pression P2 supérieure à la pression P1. La pompe 4 est telle que la pression P2 est ajustable en fonction des besoins explicités plus loin.

Le GNL pompé par la pompe 4 est envoyé dans une conduite 8 qui se subdivise ensuite en trois branches décrites ci-après.

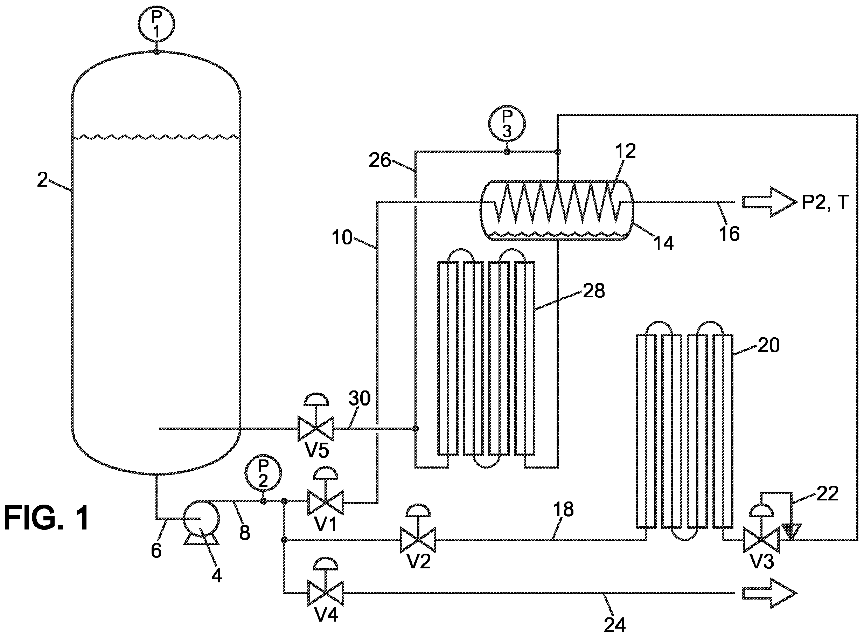

Une première branche 10 conduit le GNL en sortie de la pompe 4 vers une première ligne, appelée par la suite ligne froide 12 qui traverse ensuite une enceinte 14 pressurisée. Cette enceinte 14 est alimentée par une conduite d'alimentation et comporte en outre une conduite d'évacuation, la conduite d'alimentation et la conduite d'évacuation forment une seconde ligne appelée par la suite ligne chaude. Sur la figure 1, la ligne froide 12 s'étend horizontalement tandis que la ligne chaude s'étend verticalement au niveau de l'enceinte 14. Cette ligne chaude réalise en fait l'alimentation en gaz sous pression de l'enceinte 14 pressurisée servant d'enveloppe ou de "peau" à la ligne froide 12. En aval, elle permet l'évacuation de liquide condensé au sein de ladite enceinte. Dans une forme de réalisation préférée, la ligne froide 12 et l'enceinte 14 forment tous deux un seul et même composant. Cet ensemble forme un échangeur de chaleur entre le fluide (liquide) destiné à circuler dans la ligne froide et le fluide (gazeux en amont) destiné à circuler dans la ligne chaude. Cet ensemble, dans la présente application, permet de réguler la température du liquide circulant dans la ligne froide et forme un condenseur dans lequel une partie du gaz alimenté par la ligne chaude se condense. Une vanne V1 permet de réguler le débit de GNL dans la première branche 10. En sortie de la ligne froide 12, le gaz naturel liquéfié est conduit par une conduite, dite ligne principale 16, pour alimenter un véhicule en carburant (GNL) dans les conditions de température et de pression requises par ce véhicule (non représenté).

Une deuxième branche 18, à l'intérieur de laquelle le débit est régulé par une vanne V2 disposée en amont de la branche, conduit du gaz naturel liquéfié pompé par la pompe 4 vers un premier évaporateur 20. Un régulateur 22 associé à une vanne V3 permet de réguler la pression du gaz naturel à l'état gazeux en sortie du premier évaporateur pour alimenter l'enceinte 14. On suppose que la pression de régulation au niveau du régulateur 22 est sensiblement la pression régnant dans l'enceinte 14. Cette pression est appelée P3 par la suite.

Une troisième branche 24 est prévue pour délivrer directement du gaz naturel liquéfié dans les conditions dans lesquelles il se trouve dans le réservoir de stockage 2. Cette branche comporte uniquement une vanne V4 permettant la régulation de son débit. Le liquide délivré par la troisième branche 24 peut être aussi amené à une pression P2 (supérieure à la pression P1 du GNL dans le réservoir de stockage 2) par la pompe 4. Dans ce dernier cas, le GNL est délivré sous-refroidi à une pression P2 à une température T2 inférieure à la température de saturation du gaz naturel à la pression P2.

On remarque sur l'unique figure également la présence d'une boucle 26 contenant un second évaporateur 28. Cette boucle 26 a pour but de prélever du gaz naturel qui s'est condensé dans l'enceinte 14 pour l'amener vers le second évaporateur 28 dans lequel il repasse à l'état gazeux pour alimenter à nouveau l'enceinte 14. Le second évaporateur 28, de même que le premier évaporateur 20, peut être un évaporateur en échange thermique avec l'air ambiant, ou bien un évaporateur électrique ou à vapeur (ou tout autre dispositif permettant de provoquer une vaporisation du liquide).

Un circuit de régulation comportant une conduite 30 reliant la boucle 26 en aval du second évaporateur 28 au réservoir de stockage 2 ainsi qu'une vanne V5 de régulation est avantageusement prévu. Son fonctionnement est expliqué plus loin. Il permet notamment d'adapter rapidement, dans certaines conditions, la pression dans l'enceinte 14 et dans le circuit correspondant.

D'autres éléments de contrôle et de gestion sont prévus pour la station décrite ci-dessus mais ne sont pas décrits ni illustrés sur la figure unique. Ces éléments sont connus de l'homme du métier et ne contribuent pas directement à la présente invention.

Le fonctionnement de la station de ravitaillement décrite ci-dessus est le suivant pour un ravitaillement d'un véhicule en gaz naturel liquéfié.

On suppose que l'on souhaite ravitailler le véhicule à une pression P2 et à une température T données. Cette température T correspond à la température de saturation du gaz naturel à une pression P3.

La pompe 4 cryogénique est utilisée pour amener du GNL se trouvant dans le réservoir de stockage d'une pression P1 à la pression P2 (à des pertes de charge près) requise.

La majorité du liquide pompé et amené à la pression P2 est envoyé dans la première branche 10 à travers la ligne froide 12. Ce liquide traverse alors l'enceinte 14 dans laquelle sa pression reste sensiblement inchangée mais où sa température varie pour sortir de celle-ci à la pression P2 et à la température T et alimenter la ligne principale 16 vers le véhicule à ravitailler.

Une partie du liquide pompé est prélevée pour alimenter le premier évaporateur 20. Cette évaporation de GNL est utilisée pour venir pressuriser l'enceinte 14. Le régulateur 22 est utilisé pour obtenir une pression P3 dans la ligne chaude du circuit, dans l'enceinte 14 et dans la boucle 26.

L'ensemble formé par la ligne froide et l'enceinte 14 se présente par exemple sous la forme d'un échangeur à plaques permettant de réaliser un échange thermique entre le gaz naturel à l'état liquide dans la ligne froide 12 et le gaz naturel à l'état gazeux à la pression P3 et à la température de saturation correspondante. Ainsi, le GNL à l'état liquide en sortie de la ligne froide 12 se trouve sensiblement à la température du gaz naturel à l'état gazeux, c'est-à-dire la température de saturation du gaz naturel à la pression P3 qui correspond à la température de délivrance souhaitée en sortie de la ligne principale 16.

Lors de l'échange thermique entre le GNL à l'état liquide entrant dans la ligne froide 12 et le gaz naturel à l'état gazeux dans l'enceinte, du gaz est amené à passer à l'état liquide. Ce liquide est alors prélevé, de préférence par gravité, pour être vaporisé dans le second évaporateur 28 et retourner à l'état gazeux afin d'être réintroduit dans l'enceinte 14 à cet état gazeux. La pression dans la boucle 26 est régulée (à l'aide du régulateur 22) pour que le gaz se trouve sensiblement à la pression P3. Cette régulation permet de contrôler les apports de gaz en provenance du premier évaporateur 20 en fonction de la quantité de liquide qui se forme par condensation dans l'enceinte 14 afin de réaliser un équilibre dans le circuit et garantir la température de sortie du gaz naturel liquéfié dans la ligne principale 16.

Lorsque la pression dans la boucle 26 est trop élevée, ou bien lorsqu'il convient de faire baisser la pression P3 pour changer la température de délivrance de GNL dans la ligne principale 16, la baisse de pression peut être régulée à l'aide de la vanne V5. La conduite 30, intégrant la vanne V5, débouche de préférence dans la partie du réservoir de stockage 2 contenant du gaz naturel à l'état liquide. De la sorte, le gaz s'échappant de la boucle 26 se condense dans le liquide du réservoir et limite l'augmentation de la pression dans le réservoir. La régulation de pression est ici réalisée en aval du second évaporateur 28 mais on pourrait aussi envisager, dans la configuration représentée, de réguler la pression en amont de cet évaporateur.

Après le ravitaillement d'un ou plusieurs véhicules dans des mêmes conditions de pression et de température, lorsqu'un véhicule se présente à la station de ravitaillement et demande à faire le plein avec d'autres conditions de température et de pression, il convient, d'une part, d'adapter la pression de délivrance de GNL et, d'autre part, la température de délivrance.

Pour faire varier la température, comme il ressort de la description qui précède, il convient de faire varier la pression, et donc aussi la température de condensation, dans l'enceinte 14. Il convient alors d'agir au niveau du régulateur 22 et éventuellement de la vanne V5.

On remarque dans la description qui précède que la pression (et la température) dans la ligne principale 16, c'est-à-dire pour la délivrance du GNL, est indépendante de la pression dans le réservoir de stockage 2. Le GNL peut ainsi être maintenu le plus froid possible dans le réservoir de stockage 2.

Le procédé (et le dispositif correspondant) permet de limiter les apports de chaleur dans le réservoir de stockage 2. De ce fait, on limite aussi la vaporisation du GNL se trouvant dans le réservoir et ainsi la purge de gaz à l'état gazeux par une soupape correspondante permettant d'éviter les surpressions dans le réservoir (mais provoquant la perte de gaz naturel).

Le procédé et le dispositif de ravitaillement permettent donc de changer rapidement les conditions de délivrance du GNL. Il n'est pas nécessaire d'agir sur la pression de la phase gazeuse présente dans le réservoir de stockage pour modifier les conditions de délivrance en sortie de la ligne principale.

Le procédé de ravitaillement a été décrit ci-dessus pour le ravitaillement de véhicules qui peuvent être des véhicules de toutes sortes. Il peut également être mis en œuvre pour alimenter à partir d'un réservoir de grande taille un autre réservoir de stockage.

Le procédé selon l'invention permet le maintien d'une certaine pression dans le réservoir dans lequel du liquide cryogénique est prélevé ou bien dans le réservoir recevant du liquide cryogénique lorsqu'une pressurisation du gaz est nécessaire.

Bien entendu, la présente invention ne se limite pas au procédé de ravitaillement et au dispositif correspondant décrits ci-dessus à titre simplement illustratif et non limitatif. Elle concerne également toutes les variantes de réalisation évoquées et les autres variantes à la portée de l'homme du métier dans le cadre des revendications ci-après.

## Revendications

1. Procédé de ravitaillement en liquide cryogénique à partir d'un réservoir de stockage (2) comportant les étapes suivantes :
- pressuriser une enceinte (14) en l'alimentant avec du gaz cryogénique à une première pression, ladite enceinte étant traversée par une ligne de circulation de fluide cryogénique dite ligne froide en provenance du réservoir de stockage, alimentée en gaz sous pression et présentant une évacuation de liquide condensé,
- pomper du liquide cryogénique dans la ligne froide à une seconde pression, et
- fourniture de liquide cryogénique en aval de la ligne froide,
- l'alimentation en gaz cryogénique de l'enceinte (14) étant obtenue au moins partiellement en pompant du liquide cryogénique dans le réservoir de stockage (2) et en le vaporisant **caractérisé en ce que** dans le procédé la vaporisation a lieu dans un évaporateur et **en ce que** le procédé comporte une étape de régulation de pression après vaporisation du liquide cryogénique et avant son introduction dans l'enceinte au moyen de moyens de régulation adaptés pour maintenir la première pression dans l'enceinte.

2. Procédé de ravitaillement selon la revendication 1, **caractérisé en ce que** l'enceinte (14) est pressurisée à l'aide d'une pompe (4) et d'un évaporateur (20).

3. Procédé selon l'une des revendications 1 à 2, **caractérisé en ce que** du liquide cryogénique est pompé hors du réservoir de stockage (2), et **en ce que** le liquide pompé est utilisé, d'une part, pour l'alimentation de la ligne froide (12) et, d'autre part, pour être vaporisé avant d'être conduit vers l'enceinte (14).

4. Procédé selon l'une des revendications 1 à 3, **caractérisé en ce que** du liquide cryogénique condensé au sein de l'enceinte (14) est revaporisé avant d'être réintroduit dans ladite enceinte (14).

5. Procédé selon la revendication 4, **caractérisé en ce que** le liquide cryogénique condensé au sein de l'enceinte (14) est revaporisé dans une boucle (26) comportant un évaporateur (28) avant d'être réintroduit dans ladite enceinte (14).

6. Procédé selon l'une des revendications 1 à 5, **caractérisé en ce que** le liquide cryogénique est du gaz naturel liquéfié, et **en ce que** le gaz cryogénique est du gaz naturel à l'état gazeux.

7. Dispositif de ravitaillement en liquide cryogénique comportant
un réservoir de stockage (2),
une enceinte (14) pressurisée traversée par une première ligne dite ligne froide (12) avec
une entrée alimentée par une pompe (4) en liquide cryogénique en provenance du réservoir de stockage (2) et
une sortie de liquide cryogénique vers un réservoir à remplir, ladite enceinte (14) étant en outre alimentée par des moyens d'alimentation en gaz cryogénique sous pression pour la pressurisation de l'enceinte (14) et présentant une évacuation de liquide condensé,
les moyens d'alimentation de l'enceinte avec du gaz cryogénique sous pression comportent
une pompe d'alimentation en liquide cryogénique en provenance du réservoir de stockage (2) ainsi que des moyens de vaporisation (20),
**caractérisé en ce que** le dispositif comporte en outre des moyens de régulation (22, V3) de pression entre les moyens de vaporisation (20) et l'enceinte (14).

8. Dispositif de ravitaillement selon la revendication 7, **caractérisé en ce qu'**il comporte une pompe (4) et un évaporateur (20) disposés en série entre le réservoir de stockage (2) et l'enceinte (14) afin de pressuriser cette dernière.

9. Dispositif de ravitaillement selon l'une des revendications 7 à 8, **caractérisé en ce qu'**il comporte une boucle (26) avec un échangeur thermique (28), ladite boucle (26) comportant une ligne d'alimentation de l'échangeur thermique (28) à partir de l'enceinte (14) permettant de prélever par gravité du gaz cryogénique condensé sous forme liquide au sein de l'enceinte et une ligne de retour reliant la sortie de l'échangeur thermique (28) à l'enceinte (14) permettant de réintroduire du gaz cryogénique dans la ligne chaude vers l'enceinte (14) pressurisée.

10. Dispositif de ravitaillement selon la revendication 9, **caractérisé en ce que** la boucle (26) est reliée avec le réservoir de stockage (2) par une ligne comportant une vanne (V5).

11. Dispositif de ravitaillement selon l'une des revendications 7 à 10, **caractérisé en ce qu'**il comporte une pompe (4) destinée à prélever du liquide cryogénique dans le réservoir de stockage (2) et à amener le liquide cryogénique prélevé à une pression supérieure à la pression du liquide dans le réservoir de stockage (2).

12. Dispositif de ravitaillement selon la revendication 11, **caractérisé en ce qu'**en aval de la pompe (4) une troisième ligne (10) alimente la ligne froide (12) et une quatrième ligne (18) dérivée de la troisième alimente les moyens de vaporisation (20) disposés en amont de l'enceinte (14).

## Patentansprüche

1. Verfahren zum Auffüllen einer kryogenen Flüssigkeit aus einem Speichertank (2), das die folgenden Schritte aufweist:
- Unterdrucksetzen eines Gehäuses (14) durch Speisen mit kryogenem Gas mit einem ersten Druck, wobei das Gehäuse von einer Umlaufleitung für kryogenes Fluid durchquert wird, die sogenannte Kaltleitung vom Speichertank, mit unter Druck stehendem Gas gespeist wird und einen Ablauf für eine kondensierte Flüssigkeit aufweist,
- Pumpen der kryogenen Flüssigkeit in die Kaltleitung mit einem zweiten Druck, und
- Versorgung mit einer kryogenen Flüssigkeit stromabwärts der Kaltleitung,
- wobei die Speisung mit kryogenem Gas des Gehäuses (14) zumindest teilweise durch Pumpen der kryogenen Flüssigkeit in den Speichertank (2) und Verdampfen derselben erhalten wird, **dadurch gekennzeichnet, dass** in dem Verfahren die Verdampfung in einem Verdampfer stattfindet, und **dass** das Verfahren einen Schritt der Druckregulierung nach der Verdampfung der kryogenen Flüssigkeit und vor ihrer Einführung in das Gehäuse mit Hilfe von Regulierungsmitteln aufweist, die angepasst sind, um den ersten Druck in dem Gehäuse aufrechtzuerhalten.

2. Verfahren zum Auffüllen nach Anspruch 1, **dadurch gekennzeichnet, dass** das Gehäuse (14) mittels einer Pumpe (4) und eines Verdampfers (20) unter Druck gesetzt wird.

3. Verfahren nach einem der Ansprüche 1 bis 2, **dadurch gekennzeichnet, dass** eine kryogene Flüssigkeit aus dem Speichertank (2) gepumpt wird, und **dass** die gepumpte Flüssigkeit einerseits zur Speisung der Kaltleitung (12) und andererseits zur Verdampfung vor der Zuführung zum Gehäuse (14) verwendet wird.

4. Verfahren nach einem der Ansprüche 1 bis 3, **dadurch gekennzeichnet, dass** eine innerhalb des Gehäuses (14) kondensierte kryogene Flüssigkeit wieder verdampft wird, bevor sie wieder in das Gehäuse (14) eingeführt wird.

5. Verfahren nach Anspruch 4, **dadurch gekennzeichnet, dass** die innerhalb des Gehäuses (14) kondensierte kryogene Flüssigkeit in einer Schleife (26) mit einem Verdampfer (28) wieder verdampft wird, bevor sie wieder in das Gehäuse (14) eingeführt wird.

6. Verfahren nach einem der Ansprüche 1 bis 5, **dadurch gekennzeichnet, dass** die kryogene Flüssigkeit Flüssigerdgas ist, und dass das kryogene Gas Erdgas in gasförmigem Zustand ist.

7. Vorrichtung zum Auffüllen einer kryogenen Flüssigkeit mit einem Speichertank (2),
einem unter Druck gesetzten Gehäuse (14), das von einer ersten Leitung, der sogenannten Kaltleitung (12), durchquert wird, mit
einem Einlass, der von einer Pumpe (4) mit einer kryogenen Flüssigkeit aus dem Speichertank (2) gespeist wird, und
einem Auslass für eine kryogene Flüssigkeit zu einem zu füllenden Tank, wobei das Gehäuse (14) ferner durch Mittel zur Speisung von kryogenem Druckgas zum Unterdrucksetzen des Gehäuses (14) gespeist wird und einen Ablauf für eine kondensierte Flüssigkeit aufweist,
wobei die Mittel zur Speisung des Gehäuses mit kryogenem Druckgas
eine Pumpe zur Speisung mit einer kryogenen Flüssigkeit aus dem Speichertank (2) sowie Verdampfungsmittel (20) aufweisen, **dadurch gekennzeichnet, dass** die Vorrichtung ferner Mittel (22, V3) zur Regulierung des Drucks zwischen den Verdampfungsmitteln (20) und dem Gehäuse (14) aufweist.

8. Vorrichtung zum Auffüllen nach Anspruch 7, **dadurch gekennzeichnet, dass** sie eine Pumpe (4) und einen Verdampfer (20) aufweist, die zwischen dem Speichertank (2) und dem Gehäuse (14) in Reihe angeordnet sind, um letzteres unter Druck zu setzen.

9. Vorrichtung zum Auffüllen nach einem der Ansprüche 7 bis 8, **dadurch gekennzeichnet, dass** sie eine Schleife (26) mit einem Wärmetauscher (28) aufweist, wobei die Schleife (26) eine Leitung zur Speisung des Wärmetauschers (28) aus dem Gehäuse (14) aufweist, die es ermöglicht, kryogenes Gas, das in flüssiger Form innerhalb des Gehäuses kondensiert ist, durch Schwerkraft abzuziehen, und eine Rückführleitung, die den Auslass des Wärmetauschers (28) mit dem Gehäuse (14) verbindet, die es ermöglicht, kryogenes Gas wieder in die Heißleitung zu dem unter Druck stehenden Gehäuse (14) einzuführen.

10. Vorrichtung zum Auffüllen nach Anspruch 9, **dadurch gekennzeichnet, dass** die Schleife (26) mit dem Speichertank (2) durch eine Leitung mit einem Ventil (V5) verbunden ist.

11. Vorrichtung zum Auffüllen nach einem der Ansprüche 7 bis 10, **dadurch gekennzeichnet, dass** sie eine Pumpe (4) zur Entnahme einer kryogenen Flüssigkeit in dem Speichertank (2) und zur Speisung der entnommenen kryogenen Flüssigkeit mit einem Druck aufweist, der höher ist als der Druck der Flüssigkeit im Speichertank (2).

12. Vorrichtung zum Auffüllen nach Anspruch 11, **dadurch gekennzeichnet, dass** stromabwärts der Pumpe (4) eine dritte Leitung (10) die Kaltleitung (12) und eine von der dritten abzweigende vierte Leitung (18) die stromaufwärts des Gehäuses (14) angeordneten Verdampfungsmittel (20) speist.

## Claims

1. A method for replenishing cryogenic liquid from a storage tank (2), comprising the following steps:
- pressurizing a chamber (14) by supplying it with cryogenic gas at a first pressure, said chamber being traversed by a cryogenic fluid circulation line, referred to as cold line, originating from the storage tank, supplied with pressurized gas and having a discharge for condensed liquid,
- pumping cryogenic liquid into the cold line at a second pressure, and
- supplying cryogenic liquid downstream of the cold line,
- the supplying of the chamber (14) with cryogenic gas being obtained at least partially by pumping cryogenic liquid into the storage tank (2) and vaporizing it, **characterized in that,** in the method, the vaporization takes place in an evaporator and **in that** the method comprises a step of pressure adjustment after vaporizing the cryogenic liquid and before introducing same into the chamber using adjustment means suitable for maintaining the first pressure in the chamber.

2. The replenishment method according to claim 1, **characterized in that** the chamber (14) is pressurized using a pump (4) and an evaporator (20).

3. The method according to one of claims 1 to 2, **characterized in that** cryogenic liquid is pumped out of the storage tank (2), and **in that** the pumped liquid is used, on the one hand, for supplying the cold line (12) and, on the other hand, for being vaporized before being led to the chamber (14).

4. The method according to one of claims 1 to 3, **characterized in that** cryogenic liquid condensed inside the chamber (14) is revaporized before being reintroduced into said chamber (14).

5. The method according to claim 4, **characterized in that** the cryogenic liquid condensed inside the chamber (14) is revaporized in a loop (26) comprising an evaporator (28) before being reintroduced into said chamber (14).

6. The method according to one of claims 1 to 5, **characterized in that** the cryogenic liquid is liquefied natural gas, and **in that** the cryogenic gas is natural gas in the gaseous state.

7. A device for replenishing cryogenic liquid, comprising a storage tank (2),
a pressurized chamber (14) traversed by a first line, referred to as cold line (12), having
an inlet supplied by a pump (4) with cryogenic liquid originating from the storage tank (2) and
an outlet for cryogenic liquid toward a tank to be filled, said chamber (14) being further supplied by means for supplying pressurized cryogenic gas for the pressurization of the chamber (14) and having a discharge for condensed liquid,
the means for supplying the chamber with pressurized cryogenic gas comprise
a pump for supplying cryogenic liquid originating from the storage tank (2) and also vaporization means (20), **characterized in that** the device further comprises pressure adjustment means (22, V3) between the vaporization means (20) and the chamber (14).

8. The replenishing device according to claim 7, **characterized in that** it comprises a pump (4) and an evaporator (20) arranged in series between the storage tank (2) and the chamber (14) in order to pressurize the latter.

9. The replenishing device according to one of claims 7 to 8, **characterized in that** it comprises a loop (26) with a heat exchanger (28), said loop (26) comprising a line for supplying the heat exchanger (28) from the chamber (14) making it possible to take by gravity cryogenic gas condensed in liquid form inside the chamber and a return line connecting the outlet of the heat exchanger (28) to the chamber (14) making it possible to introduce cryogenic gas back into the hot line toward the pressurized chamber (14).

10. The replenishing device according to claim 9, **characterized in that** the loop (26) is connected to the storage tank (2) by a line comprising a valve (V5).

11. The replenishing device according to one of claims 7 to 10, **characterized in that** it comprises a pump (4) intended to take cryogenic liquid from the storage tank (2) and to bring the drawn off cryogenic liquid to a pressure higher than the pressure of the liquid in the storage tank (2).

12. The replenishing device according to claim 11, **characterized in that,** downstream of the pump (4), a third line (10) supplies the cold line (12) and a fourth line (18) stemming from the third supplies the vaporization means (20) arranged upstream of the chamber (14).
